(19) Europäisches Patentamt / European Patent Office / Office européen des brevets

(11) **EP 3 938 260 B1**

(12) **FASCICULE DE BREVET EUROPEEN**

(45) Date de publication et mention de la délivrance du brevet:
**14.12.2022 Bulletin 2022/50**

(21) Numéro de dépôt: **20706742.2**

(22) Date de dépôt: **27.02.2020**

(51) Classification Internationale des Brevets (IPC):
**B60W 30/10** $^{(2006.01)}$ **B60W 10/184** $^{(2012.01)}$
**B60W 10/20** $^{(2006.01)}$ **B60W 40/114** $^{(2012.01)}$
**B62D 9/00** $^{(2006.01)}$ **B62D 15/02** $^{(2006.01)}$
**B60W 30/045** $^{(2012.01)}$ **B60T 8/1755** $^{(2006.01)}$

(52) Classification Coopérative des Brevets (CPC):
**B60T 8/17558; B60W 10/184; B60W 10/20; B60W 30/045; B60W 30/10; B60W 40/114; B62D 9/005; B62D 15/025; B62D 15/0265;** B60T 2260/02; B60W 2520/10; B60W 2720/14; B60W 2720/40

(86) Numéro de dépôt international:
**PCT/EP2020/055120**

(87) Numéro de publication internationale:
**WO 2020/182480 (17.09.2020 Gazette 2020/38)**

(54) **PROCÉDÉ D'ÉLABORATION D'UNE CONSIGNE DE PILOTAGE MIXTE D'UN SYSTÈME DE BRAQUAGE DE ROUES ET D'UN SYSTÈME DE FREINAGE DIFFÉRENTIEL D'UN VÉHICULE AUTOMOBILE**

VERFAHREN ZUR ERZEUGUNG EINES SOLLWERTES FÜR DIE KOMBINIERTE REGELUNG EINES RADLENKSYSTEMS UND EINES DIFFERENTIALBREMSSYSTEMS EINES KRAFTFAHRZEUGES

METHOD FOR GENERATING A SETPOINT FOR THE COMBINED CONTROL OF A WHEEL-STEERING SYSTEM AND OF A DIFFERENTIAL BRAKING SYSTEM OF A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.03.2019 FR 1902510**

(43) Date de publication de la demande:
**19.01.2022 Bulletin 2022/03**

(73) Titulaires:
• **Renault s.a.s**
  **92100 Boulogne Billancourt (FR)**
• **NISSAN MOTOR Co., Ltd.**
  **Yokohama-shi, Kanagawa 221-0023 (JP)**

(72) Inventeurs:
• **DO, Anh Lam**
  **92370 CHAVILLE (FR)**
• **HADDAD, Alain**
  **78180 Montigny le bretonneux (FR)**
• **BRUNO, Goeffrey**
  **92130 Issy les Moulineaux (FR)**
• **NGUYEN, Khoa Duc**
  **78500 Sartrouville (FR)**

(74) Mandataire: **Renault Group**
  **Renault s.a.s.**
  **API : TCR GRA 2 36**
  **1, Avenue du Golf**
  **78084 Guyancourt Cedex (FR)**

(56) Documents cités:
**EP-A1- 2 338 758      EP-A2- 1 650 096
US-A1- 2016 236 679      US-B1- 9 925 988**

**Description**

DOMAINE TECHNIQUE DE L'INVENTION

La présente invention concerne de manière générale les aides à la conduite de véhicules automobiles.
Elle concerne plus particulièrement un procédé d'élaboration d'une consigne de pilotage d'un système de direction et d'un système de freinage différentiel d'un véhicule automobile.

ETAT DE LA TECHNIQUE

Dans un souci de sécurisation des véhicules automobiles, on équipe actuellement ces derniers de systèmes d'aide à la conduite ou de système de conduite autonome.
Parmi ces systèmes, on connait notamment les systèmes de freinage d'urgence automatique (plus connu sous l'abréviation AEB, de l'anglais « Automatic Emergency Braking »), conçus pour éviter toute collision avec des obstacles situés dans la voie empruntée par le véhicule, en agissant simplement sur le système de freinage conventionnel du véhicule automobile.
Il existe toutefois des situations dans lesquels ces systèmes de freinage d'urgence ne permettent pas d'éviter la collision ou ne sont pas utilisables (par exemple si un engin suit de près le véhicule automobile).
Pour ces situations, il a été développé des systèmes d'évitement automatique (plus connu sous l'abréviation AES, de l'anglais «Automatic Evasive Steering » ou « Automatic Emergency Steering ») qui permettent d'éviter l'obstacle en déviant le véhicule de sa trajectoire, soit en agissant sur la direction du véhicule, soit en agissant sur le système de freinage différentiel du véhicule. Le document US9925988 B1 divulgue un tel système.
Il arrive toutefois que les systèmes AEB et AES ne permettent pas d'éviter l'obstacle en toute sécurité.

PRESENTATION DE L'INVENTION

Afin de remédier à cet inconvénient, la présente invention propose une méthode permettant d'aboutir à une bonne répartition des efforts fournis par le système de direction et le système de freinage différentiel, afin d'éviter autant que possible tout obstacle en toute sécurité.
Plus particulièrement, on propose selon l'invention un procédé d'élaboration d'une consigne de pilotage d'un système de direction et d'un système de freinage différentiel d'un véhicule automobile, comprenant des étapes de :

- acquisition d'une valeur relative à un moment de lacet total à appliquer au véhicule automobile pour qu'il suive une trajectoire requise, et de la vitesse du véhicule automobile,
- calcul, en fonction de ladite vitesse, d'au moins un seuil relatif à la proportion maximum du moment de lacet total que le système de direction ou que le système de freinage différentiel peut assurer,
- détermination, en fonction dudit seuil, d'un taux de répartition relatif à la proportion du moment de lacet total que le système de direction ou que le système de freinage différentiel doit assurer, et
- génération d'une consigne de pilotage du système de direction et du système de freinage différentiel en fonction dudit taux de répartition et de la valeur relative au moment de lacet total.

Ainsi, grâce à l'invention, il est prévu de considérer des contraintes permettant d'assurer le braquage du véhicule en toute sécurité, de calculer un seuil en fonction de ces contraintes, puis de répartir les efforts fournis par le système de direction et par le système de freinage différentiel, afin d'éviter autant que possible tout obstacle en toute sécurité.
D'autres caractéristiques avantageuses et non limitatives du précédé conforme à l'invention, prises individuellement ou selon toutes les combinaisons techniquement possibles, sont les suivantes :

- le seuil est relatif à la proportion maximum du moment de lacet total que le système de direction peut assurer ;
- le seuil est déterminé en fonction d'une limite maximum d'angle de braquage des roues du véhicule automobile ;
- le seuil est déterminé en fonction d'une limite maximum de vitesse de braquage des roues du véhicule automobile ;
- le seuil est déterminé en fonction d'une courbure maximum de trajectoire que le véhicule automobile peut suivre ;
- le seuil est déterminé en fonction d'une vitesse angulaire de lacet maximum que le véhicule automobile peut endurer ;
- le seuil est calculé au moyen d'une première équation :

$$\alpha_{max} = min\left( \frac{l_f(C_f + C_r)}{C_r\left[(l_f + l_r)^2 + \kappa V^2\right]} \frac{\delta_{safety}}{\rho_{max}} , \frac{l_f(C_f + C_r)}{C_r\left[(l_f + l_r)^2 + \kappa V^2\right]} \frac{\dot{\delta}_{safety}}{\dot{\rho}_{max}} , 1 \right)$$

où :

$$\kappa = m\left(\frac{l_r}{C_f} - \frac{l_f}{C_r}\right)$$

et avec :

V la vitesse du véhicule automobile,
$l_f$ la distance entre le centre de gravité et l'essieu avant du véhicule automobile,
$l_r$ la distance entre le centre de gravité et l'essieu arrière du véhicule automobile,
Cf le coefficient de rigidité de dérive des roues avant du véhicule automobile,
$C_r$ le coefficient de rigidité de dérive des roues arrière du véhicule automobile,
m la masse du véhicule automobile,
$\delta_{safety}$ la limite maximum d'angle de braquage des roues du véhicule automobile,
$\rho_{max}$ la courbure maximum de la trajectoire que le véhicule automobile peut suivre,
$\dot{\delta}_{safety}$ la limite maximum de vitesse de braquage des roues du véhicule automobile,
$\dot{\rho}_{max}$ la vitesse angulaire de lacet maximum que le véhicule automobile peut endurer ;

- le seuil est relatif à la proportion maximum du moment de lacet total que le système de freinage différentiel peut assurer ;
- le seuil est déterminé en fonction d'une limite maximum de moment de lacet imposable par le système de freinage différentiel ;
- le seuil est calculé au moyen d'une seconde équation :

$$\alpha_{min} = max\left(1 - \frac{(C_f + C_r)}{C_f C_r\left[(l_f + l_r)^2 + \kappa V^2\right]}\frac{M_{DB\_sat\_act}}{\rho_{max}}\ , 0\right)$$

avec $M_{DB\_sat\_act}$ la limite maximum de moment de lacet imposable par le système de freinage différentiel ;
- il est prévu de calculer un premier seuil au moyen de la première équation et un second seuil au moyen de la seconde équation et dans lequel, si le premier seuil est inférieur au second seuil :

  - la consigne de pilotage du système de direction est choisie nulle,
  - la consigne de pilotage du système de freinage différentiel est choisie nulle,
  - il est prévu d'élaborer une consigne non nulle de pilotage d'un système de freinage conventionnel du véhicule automobile ;

- préalablement à l'étape d'acquisition, la trajectoire est déterminée en fonction de la position d'un obstacle situé sur le trajet du véhicule automobile.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.
Sur les dessins annexés :

La figure 1 est une vue schématique de dessus d'un véhicule automobile circulant sur une route, sur laquelle la trajectoire que ce véhicule doit emprunter est représentée ;
La figure 2 est une vue schématique en perspective du véhicule automobile de la figure 1, représenté dans quatre positions successives situées le long d'une autre trajectoire, et d'un obstacle ;
La figure 3 est un graphique illustrant les seuils entre lesquels le taux de répartition $\alpha_R$ doit être choisi ;

La figure 4 est un logigramme illustrant un exemple d'algorithme de mise en œuvre du procédé conforme à l'invention. La figure 5 est une vue schématique de dessus d'un véhicule automobile.

Sur la figure 5, on a représenté un véhicule automobile 10 comprenant classiquement un châssis qui délimite un habitacle, deux roues avant 11 directrices, et deux roues arrière 12 non directrices. En variante, ces deux roues arrière pourraient également être directrices.

Ce véhicule automobile 10 comporte un système de direction conventionnel 14 permettant d'agir sur l'orientation des roues avant 11 de façon à pouvoir faire tourner le véhicule. Ce système de direction conventionnel 14 comprend notamment un volant connecté à des biellettes afin de faire pivoter les roues avant 11. Dans l'exemple considéré, il comporte également un actionneur permettant d'agir sur l'orientation des roues avant en fonction de l'orientation du volant et/ou en fonction d'une requête reçue d'un calculateur 13.

Ce véhicule automobile 10 comporte par ailleurs un système de freinage conventionnel 16 permettant d'agir sur la vitesse de rotation des roues de façon à ralentir le véhicule automobile 10. Ce système de freinage conventionnel 16 est en particulier prévu pour agir sensiblement de la même façon sur les deux roues 11 (et sur les deux roues arrière 12) de façon à ce qu'en cas de freinage, le véhicule conserve globalement sa trajectoire. Ce système de freinage conventionnel 16 comprend par exemple une pédale de frein et des étriers de freins permettant de pincer des disques de frein équipant les roues. Dans l'exemple considéré, il comporte également un actionneur permettant d'agir sur les étriers de frein en fonction de la pression exercée sur la pédale de frein et/ou en fonction d'une requête reçue du calculateur 13.

Ce véhicule automobile comporte enfin un système de freinage différentiel 15 permettant d'agir différemment sur les vitesses de rotation des roues avant 11 (et sur celles des roues arrière 12) de façon à ralentir le véhicule automobile en le faisant tourner. Ce système de freinage différentiel 15 comprend par exemple un différentiel piloté ou des moteurs électriques placés au niveau des roues du véhicule. Dans l'exemple considéré, le différentiel piloté ou les moteurs électriques sont pilotés par le calculateur 13.

Le calculateur 13 est alors prévu pour piloter ces différents systèmes de façon coordonnée. Il comporte à cet effet au moins un processeur, au moins une mémoire et différentes interfaces d'entrée et de sortie.

Grâce à ses interfaces d'entrée, le calculateur 13 est adapté à recevoir des signaux d'entrée provenant de différents capteurs.

Parmi ces capteurs, il est par exemple prévu :

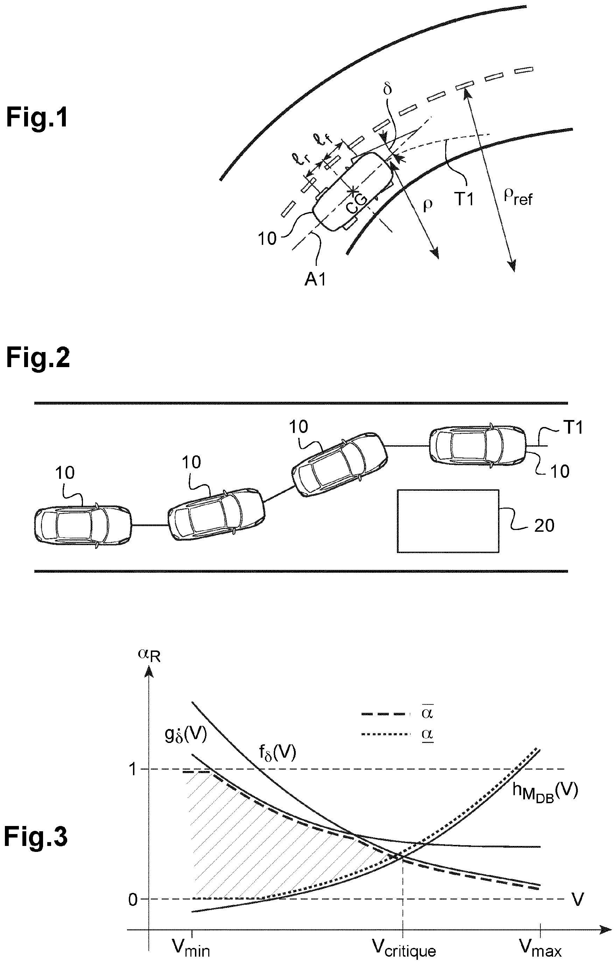

- un dispositif tel qu'une caméra frontale, permettant de repérer la position du véhicule par rapport à sa voie de circulation,
- un dispositif tel qu'un télédétecteur RADAR ou LIDAR, permettant de détecter un obstacle 20 se trouvant sur la trajectoire du véhicule automobile 10 (figure 2),
- un dispositif tel qu'un gyromètre, permettant de déterminer la vitesse de rotation en lacet (autour d'un axe vertical) du véhicule automobile 10, et
- un capteur de position et de vitesse angulaire du volant.

Grâce à ses interfaces de sortie, le calculateur 13 est adapté à transmettre des requêtes aux systèmes précités.

Il permet ainsi de forcer le véhicule à suivre une trajectoire d'évitement T1 et à ralentir à la vitesse souhaitée.

Grâce à sa mémoire, le calculateur 13 mémorise des données utilisées dans le cadre du procédé décrit ci-dessous.

Il mémorise notamment une application informatique, constituée de programmes d'ordinateur comprenant des instructions dont l'exécution par le processeur permet la mise en œuvre par le calculateur du procédé décrit ci-après.

Avant de décrire ce procédé, on peut introduire les différentes variables qui seront utilisées, dont certaines sont illustrées sur la figure 1.

La masse totale du véhicule automobile sera notée « m » et sera exprimée en kg.

L'inertie du véhicule automobile autour d'un axe vertical passant par son centre de gravité CG sera notée « J » et sera exprimée en kg.m$^2$.

La distance entre le centre de gravité CG et l'essieu avant du véhicule sera notée « $l_f$ » et sera exprimée en mètres.

La distance entre le centre de gravité CG et l'essieu arrière sera notée « $l_r$ » et sera exprimée en mètres.

Le coefficient de rigidité de dérive des roues avant sera noté « Cf » et sera exprimé en N/rad.

Le coefficient de rigidité de dérive des roues arrière sera noté « $C_r$ » et sera exprimé en N/rad.

Ces coefficients de rigidité de dérive des roues sont des notions bien connues de l'homme du métier. A titre d'exemple, le coefficient de rigidité de dérive des roues avant est ainsi celui qui permet d'écrire l'équation $F_f = 2.C_f.\alpha_f$, avec $F_f$ la force latérale de glissement des roues avant et $\alpha_f$ l'angle de dérive des roues avant.

L'angle de braquage que font les roues avant directrices avec l'axe longitudinal A1 du véhicule automobile 10

sera noté « δ » et sera exprimé en rad.

La vitesse de lacet du véhicule (autour de l'axe vertical passant par son centre de gravité CG) sera notée « r » et sera exprimée en rad/s.

L'angle relatif de cap entre l'axe longitudinal A1 du véhicule et la tangente à la trajectoire d'évitement T1 (trajectoire souhaitée du véhicule) sera noté « $\Psi_L$ » et sera exprimé en rad.

L'écart latéral entre l'axe longitudinal A1 du véhicule automobile 10 (passant par le centre de gravité CG) et la trajectoire d'évitement T1, à une distance de visée « ls » située à l'avant du véhicule, sera noté « $e_{yL}$ » et sera exprimé en mètres.

La distance de visée « ls » précitée sera mesurée à partir du centre de gravité CG et s'exprimera en mètres.

L'angle de dérive du véhicule automobile 10 (angle que fait le vecteur vitesse du véhicule automobile avec son axe longitudinal A1) sera noté « β » et sera exprimé en rad.

La vitesse du véhicule automobile selon l'axe longitudinal A1 sera noté « V » et s'exprimera en m/s.

La courbure de la trajectoire d'évitement T1 sera notée ρ et s'exprimera en m$^{-1}$.

La courbure moyenne de la voie de circulation sera notée $\rho_{ref}$ et s'exprimera en m$^{-1}$.

Le moment de lacet total à appliquer au véhicule automobile 10 de façon à ce qu'il suive la trajectoire d'évitement T1 requise sera noté « $M_{Yaw\_total}$ » et sera exprimé en Nm.

La composante de ce moment de lacet total $M_{Yaw\_total}$ exécutée à l'aide du seul système de freinage différentiel 15 sera notée « $M_{DB}$ » et sera exprimée en Nm.

Avant de décrire le procédé qui sera exécuté par le calculateur pour mettre en œuvre l'invention, on pourra dans une première partie de cet exposé décrire les calculs qui ont permis d'aboutir à l'invention, de façon à bien comprendre d'où proviennent ces calculs et sur quels ressorts ils s'appuient.

A titre liminaire, on considérera ici que le moment de lacet total $M_{Yaw\_total}$ permettant de suivre la trajectoire d'évitement T1 (ou au moins de minimiser l'écart latéral $e_{yL}$) peut être modélisé de la façon suivante :

[Math 1]

$$\begin{pmatrix} \dot{\beta} \\ \dot{r} \\ \dot{\psi}_L \\ \dot{e}_{yL} \end{pmatrix} = \begin{bmatrix} -\dfrac{C_f + C_r}{mV} & -1 + \dfrac{C_r l_r - C_f l_f}{mV^2} & 0 & 0 \\ -\dfrac{C_f l_f - C_r l_r}{J} & -\dfrac{C_r l_r^2 + C_f l_f^2}{JV} & 0 & 0 \\ 0 & 1 & 0 & 0 \\ V & l_s & V & 0 \end{bmatrix} \begin{pmatrix} \beta \\ r \\ \psi_L \\ e_{yL} \end{pmatrix} + \begin{bmatrix} 0 \\ 1 \\ \dfrac{1}{J} \\ 0 \\ 0 \end{bmatrix} M_{Yaw\_total}$$

L'objectif de l'invention est d'assurer une commande des systèmes de freinage différentiel 15 et de direction 14 qui permette au véhicule automobile 10 de suivre une trajectoire d'évitement T1 passant à côté d'un obstacle détecté sur son trajet et qui puisse être suivie en toute sécurité par le véhicule automobile 10.

Pour cela, la première contrainte à imposer à l'algorithme de pilotage du véhicule est qu'il faut que cette trajectoire d'évitement T1 soit moins courbée que la trajectoire d'évitement maximale au-delà de laquelle on risquerait de perdre le contrôle du véhicule automobile 10. Cette trajectoire d'évitement maximum, qui dépend de la vitesse V du véhicule automobile 10, et supposée connue et est définie par une courbure de trajectoire d'évitement maximum et par une vitesse de lacet maximum, ce que l'on peut écrire sous la forme des équitations suivantes :

[Math2]

$$\rho \leq \rho_{max}$$

[Math3]

$$\dot{\rho} \leq \dot{\rho}_{max}$$

On notera ici que la courbure de trajectoire d'évitement maximum et la vitesse de lacet maximum dépendent de la vitesse V du véhicule automobile 10.

Si on considère les deux premières lignes de l'équation Math 1, on peut écrire :

[Math 4]

$$\begin{pmatrix} \dot{\beta} \\ \dot{r} \end{pmatrix} = \begin{bmatrix} -\dfrac{C_f + C_r}{mV} & -1 + \dfrac{C_r l_r - C_f l_f}{mV^2} \\ -\dfrac{C_f l_f - C_r l_r}{J} & -\dfrac{C_r l_r^2 + C_f l_f^2}{JV} \end{bmatrix} \begin{pmatrix} \beta \\ r \end{pmatrix} + \begin{bmatrix} 0 \\ \dfrac{1}{J} \end{bmatrix} M_{Yaw\_total}$$

Cette équation peut, en régime permanent (ou « *static* »), s'écrire :

[Math 5]

$$\begin{cases} a_{11}\beta + a_{12}r = 0 \\ a_{21}\beta + a_{22}r + b_2 M_{Yaw\_total\_static} = 0 \end{cases}$$

Dans cette équation, les coefficients peuvent être calculés de la manière suivante :

[Math 6]

$$a_{11} = -\frac{C_f + C_r}{mV}$$

$$a_{22} = -\frac{C_r l_r^2 + C_f l_f^2}{JV}$$

$$a_{12} = -1 + \frac{C_r l_r - C_f l_f}{mV^2}$$

$$a_{21} = -\frac{C_f l_f - C_r l_r}{J}$$

$$b_2 = \frac{1}{J}$$

La résolution de l'équation Math 5 permet d'écrire :

[Math 7]

$$M_{Yaw\_total\_static} = \frac{a_{21}a_{12} - a_{11}a_{22}}{a_{11}b_2} r$$

Ou encore :

[Math 8]

$$M_{Yaw\_total\_static} = \frac{C_f C_r \left[ (l_f + l_r)^2 + \kappa V^2 \right]}{(C_f + C_r)V} r$$

Dans cette équation, le coefficient K peut s'écrire :

[Math 9]

$$\kappa = m\left(\frac{l_r}{C_f} - \frac{l_f}{C_r}\right)$$

La vitesse de lacet r peut être estimée par l'équation :

[Math 10]

$$r = \rho.v$$

De sorte que l'on peut écrire :

[Math 11]

$$M_{Yaw\_total\_static} = -\frac{C_f C_r\left[(l_f + l_r)^2 + \kappa V^2\right]}{(C_f + C_r)}\rho$$

Cette équation, combinée avec les deux conditions énoncées par les équations Math 2 et Math 3, permet d'écrire les deux conditions suivantes :

[Math 12]

$$sup(M_{Yaw\_total}) = \frac{C_f C_r\left[(l_f + l_r)^2 + \kappa v^2\right]}{(C_f + C_r)}\rho_{max}$$

[Math 13]

$$sup(\dot{M}_{Yaw\_total}) = \frac{C_f C_r\left[(l_f + l_r)^2 + \kappa v^2\right]}{(C_f + C_r)}\dot{\rho}_{max}$$

Pour écrire ces deux équations, on suppose que $M_{Yaw\_total}$ est inférieur à $M_{Yaw\_total\_static}$. On suppose aussi qu'il en va de même pour leurs dérivées.

A ce stade, on peut modéliser le véhicule automobile 10 en fonction de la composante du moment de lacet $M_{DB}$, au moyen de l'équation suivante :

[Math 14]

$$\begin{pmatrix} \dot{\beta} \\ \dot{r} \\ \dot{\psi}_L \\ \dot{e}_{yL} \end{pmatrix} = \begin{bmatrix} -\dfrac{C_f + C_r}{mV} & -1 + \dfrac{C_r l_r - C_f l_f}{mV^2} & 0 & 0 \\ -\dfrac{C_f l_f - C_r l_r}{J} & -\dfrac{C_r l_r^2 + C_f l_f^2}{JV} & 0 & 0 \\ 0 & 1 & 0 & 0 \\ V & l_s & V & 0 \end{bmatrix} \begin{pmatrix} \beta \\ r \\ \psi_L \\ e_{yL} \end{pmatrix} + \begin{bmatrix} \dfrac{C_f}{mV} \\ \dfrac{C_f l_f}{J} \\ 0 \\ 0 \end{bmatrix} \delta + \begin{bmatrix} 0 \\ \dfrac{1}{J} \\ 0 \\ 0 \end{bmatrix} M_{DB}$$

La seconde ligne de cette équation permet alors d'écrire :

[Math 15]

$$J\dot{r} = -(C_f l_f - C_r l_r)\beta - \frac{C_r l_r^2 + C_f l_f^2}{V} r + C_f l_f \delta + M_{DB}$$

A ce stade, on peut faire l'hypothèse que l'angle de dérive β correspondant au glissement du véhicule sur la route est nul. On peut alors écrire, en lien avec l'équation Math 1 :

[Math 16]

$$M_{Yaw\_total} = C_f l_f \delta + M_{DB}$$

Cette équation illustre bien la répartition du moment de lacet total $M_{Yaw\_total}$ entre, d'une part, la composant $M_{DB}$ assurée par le système de freinage différentiel 15 et la composante $C_f.L_f.\delta$ assurée par le système de direction conventionnel 14.

On peut alors écrire les deux équations suivantes :

[Math 17]

$$\delta = \alpha_R \frac{M_{Yaw\_total}}{C_f l_f}$$

[Math 18]

$$M_{DB} = (1 - \alpha_R) M_{Yaw\_total}$$

Dans ces équations, le coefficient $\alpha_R$ correspond au « taux de réparation » entre les deux composantes précitées.

Ce taux de répartition $\alpha_R$ correspond plus précisément au pourcentage du moment de lacet total $M_{Yaw\_total}$ qui est assuré par le système de direction conventionnel 14. Le complémentaire de ce pourcentage correspond quant à lui au pourcentage du moment de lacet total $M_{Yaw\_total}$ qui est assuré par le système de freinage différentiel 15.

Au sujet ce de taux de répartition $\alpha_R$, on peut naturellement écrire :

[Math 19]

$$0 \leq \alpha_R \leq 1$$

A ce stade, on souhaite par ailleurs fixer une seconde et une troisième contraintes à imposer à l'algorithme de pilotage du véhicule automobile 10 pour assurer à un conducteur quelconque d'être en mesure de pouvoir reprendre le contrôle de ce véhicule à tout moment. Ces deux autres contraintes portent sur une valeur maximum de l'angle de braquage et sur une vitesse angulaire maximum de braquage (c'est-à-dire à une vitesse de rotation des roues autour d'un axe vertical) au-delà desquels il serait difficile pour un conducteur de reprendre le contrôle du véhicule en toute sécurité. On peut écrire ces deux contraintes sous la forme suivante :

[Math 20]

$$\delta \leq \delta_{safety}$$

[Math 21]

$$\dot{\delta} \leq \dot{\delta}_{safety}$$

On notera ici que la valeur maximum de l'angle de braquage et la vitesse angulaire maximum de braquage peuvent dépendre de la vitesse V du véhicule automobile 10.

On souhaite aussi fixer une quatrième contrainte à imposer à l'algorithme de pilotage du véhicule automobile 10, consistant à assurer un couple de freinage différentiel à l'ensemble des roues 11, 12 qui soit inférieur à un seuil de saturation (au-delà duquel les roues déraperaient), ce qu'on peut écrire :

[Math 22]

$$M_{DB} \leq M_{DB\_sat\_act}$$

On notera ici que ce seuil de saturation pourra varier en fonction par exemple de la vitesse V du véhicule automobile 10.

La combinaison des équations Math 12, math 13 et Math 17 permet alors d'écrire les équations :

[Math 23]

$$sup(\delta) \sim \alpha_R \frac{C_r\left[(l_f + l_r)^2 + \kappa V^2\right]}{l_f(C_f + C_r)} \rho_{max}$$

[Math 24]

$$sup(\dot{\delta}) \sim \frac{\alpha_R C_r\left[(l_f + l_r)^2 + \kappa V^2\right]}{l_f(C_f + C_r)} \dot{\rho}_{max}$$

Pour garantir la cohérence des équations Math 20 et Math 23 d'une part, et celle des équations Math 21 et Math 24 d'autre part, le taux de répartition $\alpha_R$ doit alors respecter la condition ci-dessous :

[Math 25]

$$\alpha_R \leq \bar{\alpha} = min\left(\frac{l_f(C_f + C_r)}{C_r\left[(l_f + l_r)^2 + \kappa V^2\right]} \frac{\delta_{safety}}{\rho_{max}}, \frac{l_f(C_f + C_r)}{C_r\left[(l_f + l_r)^2 + \kappa V^2\right]} \frac{\dot{\delta}_{safety}}{\dot{\rho}_{max}}, 1\right)$$

$\bar{\alpha}$, également noté $\alpha_{max}$, étant un seuil supérieur pour le taux de répartition $\alpha_R$.

Les équations Math 12, Math 18 et Math 22 permettent également d'écrire :

[Math 26]

$$\alpha_R \geq \underline{\alpha} = max\left(1 - \frac{(C_f + C_r)}{C_f C_r\left[(l_f + l_r)^2 + \kappa V^2\right]}\frac{M_{DB\_sat\_act}}{\rho_{max}}, 0\right)$$

$\underline{\alpha}$, également noté $\alpha_{min}$, étant un seuil minimum pour le taux de répartition $\alpha_R$.

On comprend également qu'il faut que ce seuil satisfasse l'équation :

[Math 27]

$$\bar{\alpha} \geq \underline{\alpha}$$

Pour assurer la faisabilité de la répartition du moment de lacet entre le système de freinage différentiel et le système de direction conventionnel, il faut donc que le taux de répartition $\alpha_R$ soit choisi afin d'être compris entre ces deux seuils $\alpha_{min}$, $\alpha_{max}$. Pour illustrer de façon graphique cette condition, on peut introduire les trois fonctions mathématiques f, g et h.

La première fonction f correspond à une première limite supérieure du taux de répartition $\alpha_R$, qui est liée à la limite d'angle de braquage $\delta$ que l'on s'est imposé. Cette première fonction peut s'écrire :

[Math 28]

$$f_\delta(V) = \frac{l_f(C_f + C_r)}{C_r\left[(l_f + l_r)^2 + \kappa V^2\right]}\frac{\delta_{safety}}{\rho_{max}}$$

La seconde fonction g correspond à une autre limite supérieure du taux de répartition $\alpha_R$, qui est cette fois liée à la limite de vitesse angulaire de braquage que l'on s'est imposé. Cette seconde fonction peut s'écrire :

[Math 29]

$$g_{\dot{\delta}}(V) = \frac{l_f(C_f + C_r)}{C_r\left[(l_f + l_r)^2 + \kappa V^2\right]}\frac{\dot{\delta}_{safety}}{\dot{\rho}_{max}}$$

La troisième fonction h correspond à une limite inférieure du taux de répartition $\alpha_R$, qui est liée à la limite de moment de lacet imposable par le système de freinage différentiel 15. Cette troisième fonction peut s'écrire :

[Math 30]

$$h_{M_{DB}}(V) = 1 - \frac{(C_f + C_r)}{C_f C_r\left[(l_f + l_r)^2 + \kappa V^2\right]}\frac{M_{DB\_sat\_act}}{\rho_{max}}$$

Un exemple d'illustration de ces trois fonctions mathématiques f, g, h est donné sur la figure 3.

Dans cet exemple, la partie hachurée correspond à la zone dans laquelle il est possible de choisir le taux de répartition $\alpha_R$ de façon à ce que l'ensemble des contraintes que l'on impose à l'algorithme soient satisfaites.

On comprend ainsi que ce taux de répartition doit être choisi entre 0 et 1, et de façon à être inférieur aux première et seconde fonctions mathématiques f, g et supérieur à la troisième fonction mathématique h.

On observe sur cette figure 3 qu'il existe une vitesse critique $V_{critique}$ au-delà de laquelle il n'est pas possible de trouver un taux de répartition $\alpha_R$ assurant toutes les contraintes souhaitées.

Lorsqu'on se trouve dans ce cas de figure, il est alors tout d'abord prévu de réaliser un freinage d'urgence du véhicule en ligne droite, à l'aide du seul système de freinage conventionnel 16, jusqu'à ce que la vitesse V du véhicule automobile 10 soit inférieure ou égale à la vitesse critique $V_{critique}$. Ensuite, un taux de répartition compris entre les trois fonctions mathématiques est sélectionné pour assurer l'évitement de l'obstacle par le véhicule automobile.

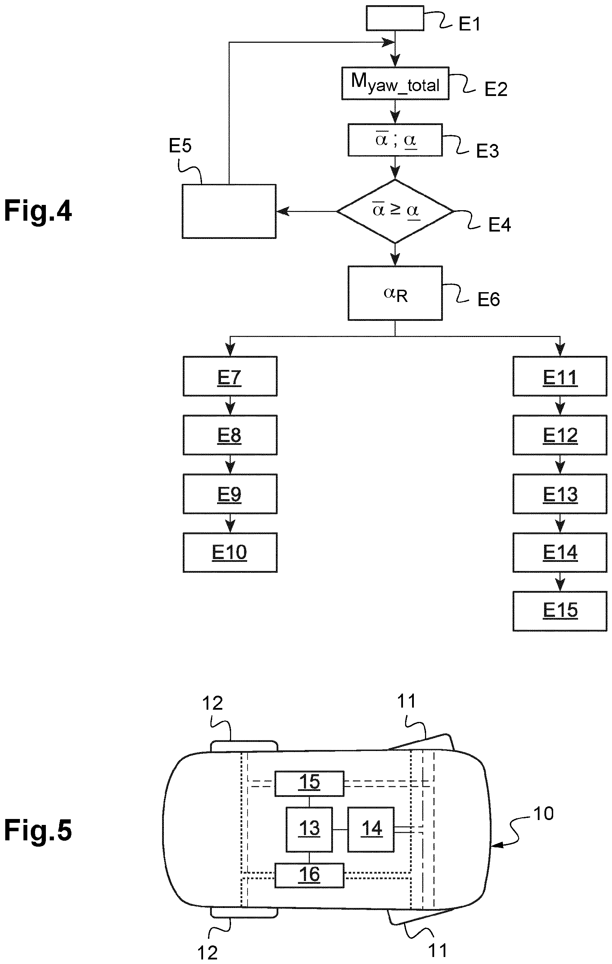

A ce stade, maintenant que les quatre contraintes imposées au véhicule sont connues et maintenant que l'origine des équations Math 25 et Math 26 est expliquée, on peut donner un exemple de mode de réalisation d'un procédé d'élaboration d'une consigne de pilotage du véhicule automobile conforme à l'invention, en référence à la figure 4.

Le calculateur 13 est ici programmé pour mettre en œuvre ce procédé de façon récursive, c'est-à-dire pas à pas, et en boucle.

Pour cela, au cours d'une première étape E1, le calculateur 13 tente de détecter la présence d'un éventuel obstacle se trouvant sur le trajet du véhicule automobile 10. Il utilise pour cela son télédétecteur RADAR ou LIDAR.

En l'absence d'obstacle, cette étape E1 est répétée en boucles.

Dès qu'un obstacle 20 est détecté (voir figure 2), le calculateur 13 planifie une trajectoire d'évitement T1 permettant d'éviter cet obstacle 20.

Le calculateur 13 va alors chercher à définir des consignes de pilotage pour le système de freinage conventionnel 16, le système de freinage différentiel 15 et le système de direction conventionnel 14.

Pour cela, au cours d'une seconde étape E2, le calculateur 13 détermine tout d'abord la valeur du moment de lacet total $M_{Yaw\_total}$ à appliquer au véhicule de façon à ce qu'il puisse suivre la trajectoire d'évitement T1.

La manière de calculer la valeur du moment de lacet total $M_{Yaw\_total}$ ne sera pas ici décrite puisqu'elle ne fait pas en propre l'objet de la présente invention. On pourra simplement rappeler que différentes méthodes de calcul de cette valeur sont déjà bien connues. On pourra par exemple utiliser un contrôleur PID classique, une commande MPC (de l'anglais « model prédictive control ») ou encore toute autre stratégie connue de l'art antérieur.

Au cours d'une troisième étape E3, le calculateur 13 détermine les seuils maximum $\alpha_{max}$ et minimum $\alpha_{min}$ que le taux de répartition $\alpha_R$ peut prendre.

Pour cela, le calculateur relève la vitesse V du véhicule automobile 10, puis il utilise les équations Math 25 et Math 26 pour déterminer ces valeurs.

On observera que les valeurs des variables utiles à ces calculs seront à ce stade connues et stockées dans la mémoire du calculateur (certaines d'entre elles dépendant elles-mêmes de la vitesse V). Elles auront par exemple pu être déterminées au cours d'une campagne de test réalisée sur un véhicule du même modèle que celui ici considéré.

Au cours d'une quatrième étape E4, le calculateur détermine si le seuil maximum $\alpha_{max}$ calculé est bien supérieur au seuil minimum $\alpha_{min}$.

Si tel n'est pas le cas, ce qui signifie que le véhicule automobile 10 roule à une vitesse supérieure à la vitesse critique $V_{critique}$, le calculateur 13 commande le freinage du véhicule automobile 10 au moyen du système de freinage conventionnel 16 (étape E5). La procédé recommence ensuite à l'étape E2.

Dans le cas contraire, le calculateur 13 choisit un taux de répartition $\alpha_R$ qui est compris entre ces deux seuils ainsi qu'entre 0 et 1 (étape E6).

Pour cela, si la vitesse du véhicule est faible (c'est-à-dire si le seuil maximum $\alpha_{max}$ calculé est proche de 1 ou égal à 1, et si le seuil minimum $\alpha_{min}$ est proche de 0 ou égal à 0), on peut choisir un taux de répartition $\alpha_R$ égal à 1 de façon à privilégier l'usage du système de direction conventionnel 14 pour faire tourner le véhicule de sorte qu'il suive la trajectoire d'évitement T1.

Si la vitesse du véhicule est sensiblement plus élevée, on peut au contraire privilégier l'usage du système de freinage différentiel 15.

A titre d'exemple, si la vitesse V du véhicule est inférieure à 50 km/h, on peut fixer le taux de répartition $\alpha_R$ à 1.

Si la vitesse V du véhicule est comprise entre 50 et 160 km/h (considéré dans cet exemple comme la vitesse critique $V_{critique}$), on peut fixer le taux de répartition $\alpha_R$ à une valeur inférieure à 1 (et d'autant plus inférieure à 1 que la vitesse est grande).

Ainsi, la loi de répartition entre le système de direction conventionnel 14 et le système de freinage différentiel 15 est directement liée aux limites physiques du véhicule automobile 10. En effet, le couple de freinage doit être limité pour satisfaire aux contraintes liées à la limite de l'actionneur.

Enfin, au cours des étapes E7 et E11, le calculateur 13 génère respectivement une consigne de pilotage du système de direction 14 et une consigne de pilotage du système de freinage différentiel 15 en fonction du taux de répartition $\alpha_R$ choisi et du moment de lacet total $M_{Yaw\_total}$.

A l'étape E8, le calculateur 13 vérifie que la consigne de pilotage du système de direction 14 est bien conforme aux limites de contrôlabilité définies par l'actionneur de direction assistée du système de direction conventionnel 14. En effet, ces limites de contrôlabilité se traduisent par le fait que l'angle de braquage et la vitesse de braquage doivent être limités pour que le conducteur puisse toujours reprendre en main le contrôle du volant.

A l'étape E9, le calculateur 13 convertit la consigne de moment de lacet en une consigne adaptée à l'actionneur.

A l'étape E10, l'actionneur fait tourner les roues avant 11 du véhicule en fonction de cette consigne.

En parallèle, à l'étape E12, le calculateur 13 vérifie que la consigne de pilotage du système de freinage différentiel 15 est bien conforme aux limites de contrôlabilité définies ce système.

A l'étape E13, le calculateur 13 vérifie en outre que cette même consigne de pilotage du système de freinage différentiel 15 est bien conforme aux limites de contrôlabilité définies par les autres systèmes de sécurité du véhicule, notamment par les systèmes VMC (de l'anglais « Vehicle Motion Control ») et VDC (de l'anglais « Vehicle Dynamics Control »). Il vérifie aussi que cette consigne est applicable compte tenu des capacités de freinage de chaque pneu.

A l'étape E14, le calculateur 13 convertit la consigne de moment de lacet en une consigne adaptée au système utilisé (différentiel piloté ou moteurs électriques).

A l'étape E15, le système utilisé freine les roues 11, 12 du véhicule en fonction de cette consigne.

La présente invention n'est nullement limitée au mode de réalisation décrit et représenté, mais l'homme du métier saura y apporter toute variante conforme à linvention selon les revendications annexées.

Ainsi, l'invention pourra s'appliquer à tout type de système de freinage et à tout type de système de braquage, utilisant des actionneurs par exemple électrique ou hydraulique (par exemple à un système de freinage régénératif).

L'invention est indépendante des stratégies de correction électronique de trajectoire ESP (de l'anglais « Electronic Stability Program ») qui seraient déjà présentes dans le calculateur 13. Par exemple, quand l'ESP est activé, le procédé d'élaboration d'une consigne de pilotage selon l'invention ne s'active pas. Et en aucun cas, le procédé d'élaboration d'une consigne de pilotage selon l'invention déclenche l'ESP. En effet, avec la prise en considération de la trajectoire d'évitement la plus dynamique dans le procédé selon l'invention, cela permet de ne rentrer dans la dynamique de correction de l'ESP.

## Revendications

1. Procédé d'élaboration d'une consigne de pilotage d'un système de direction (14) et d'un système de freinage différentiel (15) d'un véhicule automobile (10), comprenant des étapes de :

   - acquisition d'une valeur relative à un moment de lacet total ($M_{Yaw\_total}$) à appliquer au véhicule automobile (10) pour qu'il suive une trajectoire (T1) requise, et de la vitesse (V) du véhicule automobile (10),
   - calcul, en fonction de ladite vitesse (V), d'au moins un seuil ($\alpha_{min}$, $\alpha_{max}$) relatif à la proportion maximum du moment de lacet total ($M_{Yaw\_total}$) que le système de direction (14) ou que le système de freinage différentiel (15) peut assurer,
   - détermination, en fonction dudit seuil ($\alpha_{max}$), d'un taux de répartition ($\alpha_R$) relatif à la proportion du moment de lacet total ($M_{Yaw\_total}$) que le système de direction (14) ou que le système de freinage différentiel (15) doit assurer, et
   - génération d'une consigne de pilotage du système de direction (14) et du système de freinage différentiel (15) en fonction dudit taux de répartition ($\alpha_R$) et de la valeur relative au moment de lacet total ($M_{Yaw\_total}$).

2. Procédé selon la revendication précédente, dans lequel le seuil ($\alpha_{max}$) est relatif à la proportion maximum du moment de lacet total ($M_{Yaw\_total}$) que le système de direction (14) peut assurer et est déterminé en fonction d'une limite maximum d'angle de braquage ($\delta$) de roues (11) du véhicule automobile (10).

3. Procédé selon l'une des revendications précédentes, dans lequel le seuil ($\alpha_{max}$) est relatif à la proportion maximum du moment de lacet total ($M_{Yaw\_total}$) que le système de direction (14) peut assurer et est déterminé en fonction d'une limite maximum de vitesse de braquage de roues (11) du véhicule automobile (10).

4. Procédé selon l'une des revendications précédentes, dans lequel le seuil ($\alpha_{max}$) est relatif à la proportion maximum du moment de lacet total ($M_{Yaw\_total}$) que le système de direction (14) peut assurer et est déterminé en fonction d'une courbure maximum de trajectoire que le véhicule automobile (10) peut suivre.

5. Procédé selon l'une des revendications précédentes, dans lequel le seuil ($\alpha_{max}$) est relatif à la proportion maximum du moment de lacet total ($M_{Yaw\_total}$) que le système de direction (14) peut assurer et est déterminé en fonction d'une vitesse angulaire de lacet maximum que le véhicule automobile (10) peut endurer.

6. Procédé selon les quatre revendications précédentes, dans lequel ledit seuil ($\alpha_{max}$) est calculé au moyen d'une première équation :

$$\alpha_{max} = min\left(\frac{l_f(C_f + C_r)}{C_r\left[(l_f + l_r)^2 + \kappa V^2\right]}\frac{\delta_{safety}}{\rho_{max}}, \frac{l_f(C_f + C_r)}{C_r\left[(l_f + l_r)^2 + \kappa V^2\right]}\frac{\dot{\delta}_{safety}}{\dot{\rho}_{max}}, 1\right)$$

où :

$$\kappa = m\left(\frac{l_r}{C_f} - \frac{l_f}{C_r}\right)$$

et avec :

$V$ la vitesse du véhicule automobile (10),
$l_f$ la distance entre le centre de gravité et l'essieu avant du véhicule automobile (10),
$l_r$ la distance entre le centre de gravité et l'essieu arrière du véhicule automobile (10),
$Cf$ le coefficient de rigidité de dérive des roues avant du véhicule automobile (10),
$C_r$ le coefficient de rigidité de dérive des roues arrière du véhicule automobile (10),
$m$ la masse du véhicule automobile (10),
$\delta_{safety}$ la limite maximum d'angle de braquage des roues (11, 12) du véhicule automobile (10),
$\rho_{max}$ la courbure maximum de trajectoire que le véhicule automobile (10) peut suivre,
$\dot{\delta}_{safety}$ la limite maximum de vitesse de braquage des roues (11, 12) du véhicule automobile (10),
$\dot{\rho}_{max}$ la vitesse angulaire de lacet maximum que le véhicule automobile (10) peut endurer.

7. Procédé selon l'une des revendications précédentes, dans lequel le seuil ($\alpha_{min}$) est relatif à la proportion maximum du moment de lacet total ($M_{Yaw\_total}$) que le système de freinage différentiel (15) peut assurer et est déterminé en fonction d'une limite maximum de moment de lacet imposable par le système de freinage différentiel (15).

8. Procédé selon la revendication précédente, dans lequel le seuil ($\alpha_{min}$) est calculé au moyen d'une seconde équation :

$$\alpha_{min} = max\left(1 - \frac{(C_f + C_r)}{C_f C_r\left[(l_f + l_r)^2 + \kappa V^2\right]}\frac{M_{DB\_sat\_act}}{\rho_{max}}, 0\right)$$

où :

$$\kappa = m\left(\frac{l_r}{C_f} - \frac{l_f}{C_r}\right)$$

et avec :

$V$ la vitesse du véhicule automobile (10),
$l_f$ la distance entre le centre de gravité et l'essieu avant du véhicule automobile (10),
$l_r$ la distance entre le centre de gravité et l'essieu arrière du véhicule automobile (10),
$Cf$ le coefficient de rigidité de dérive des roues avant du véhicule automobile (10),
$C_r$ le coefficient de rigidité de dérive des roues arrière du véhicule automobile (10),
$m$ la masse du véhicule automobile (10),
$M_{DB\_sat\_act}$ la limite maximum de moment de lacet imposable par le système de freinage différentiel (15),
$\rho_{max}$ la courbure maximum de trajectoire que le véhicule automobile (10) peut suivre.

9. Procédé selon les revendications 6 et 8, dans lequel il est prévu de calculer un premier seuil ($\alpha_{max}$) au moyen de la première équation et un second seuil ($\alpha_{min}$) au moyen de la seconde équation et dans lequel, si le premier seuil ($\alpha_{max}$) est inférieur au second seuil ($\alpha_{min}$) :

- la consigne de pilotage du système de direction (14) est choisie nulle,
- la consigne de pilotage du système de freinage différentiel (15) est choisie nulle, et
- il est prévu d'élaborer une consigne non nulle de pilotage d'un système de freinage conventionnel (16) du véhicule automobile (10).

10. Procédé selon l'une des revendications précédentes, dans lequel, préalablement à l'étape d'acquisition, la trajectoire (T1) est déterminée en fonction de la position d'un obstacle (20) situé sur le trajet du véhicule automobile (10).

**Patentansprüche**

1. Verfahren zur Erzeugung eines Sollwerts zur Regelung eines Lenksystems (14) und eines Differentialbremssystems (15) eines Kraftfahrzeugs (10), umfassend folgende Schritte:

   - Erfassen eines Werts in Bezug auf ein Gesamtgiermoment ($M_{Yaw\_total}$), das an das Kraftfahrzeug (10) anzulegen ist, damit es einer geforderten Bahn (T1) folgt, und der Geschwindigkeit (V) des Kraftfahrzeugs (10),
   - Berechnen, in Abhängigkeit von der Geschwindigkeit (V), wenigstens einer Schwelle ($\alpha_{min}$, $\alpha_{max}$) in Bezug auf den maximalen Anteil des Gesamtgiermoments ($M_{Yaw\_total}$), das das Lenksystem (14) oder das Differentialbremssystem (15) sicherstellen kann,
   - Bestimmen, in Abhängigkeit von der Schwelle ($\alpha_{max}$), eines Verteilungsverhältnisses ($\alpha_R$) in Bezug auf den Anteil des Gesamtgiermoments ($M_{Yaw\_total}$), das das Lenksystem (14) oder das Differentialbremssystem (15) sicherstellen soll, und
   - Erzeugen eines Sollwerts zur Regelung des Lenksystems (14) und des Differentialbremssystems (15) in Abhängigkeit von dem Verteilungsverhältnis ($\alpha_R$) und dem Wert in Bezug auf das Gesamtgiermoment ($M_{Yaw\_total}$).

2. Verfahren nach dem vorhergehenden Anspruch, wobei die Schwelle ($\alpha_{max}$) mit dem maximalen Anteil des Gesamtgiermoments ($M_{Yaw\_total}$) in Bezug steht, das das Lenksystem (14) sicherstellen kann, und in Abhängigkeit von einer maximalen Lenkwinkelgrenze ($\delta$) von Rädern (11) des Kraftfahrzeugs (10) bestimmt wird.

3. Verfahren nach einem der vorhergehenden Ansprüche, wobei die Schwelle ($\alpha_{max}$) mit dem maximalen Anteil des Gesamtgiermoments ($M_{Yaw\_total}$) in Bezug steht, das das Lenksystem (14) sicherstellen kann, und in Abhängigkeit von einer maximalen Lenkgeschwindigkeitsgrenze von Rädern (11) des Kraftfahrzeugs (10) bestimmt wird.

4. Verfahren nach einem der vorhergehenden Ansprüche, wobei die Schwelle ($\alpha_{max}$) mit dem maximalen Anteil des Gesamtgiermoments ($M_{Yaw\_total}$) in Bezug steht, das das Lenksystem (14) sicherstellen kann, und in Abhängigkeit von einer maximalen Bahnkrümmung, der das Kraftfahrzeug (10) folgen kann, bestimmt wird.

5. Verfahren nach einem der vorhergehenden Ansprüche, wobei die Schwelle ($\alpha_{max}$) mit dem maximalen Anteil des Gesamtgiermoments ($M_{Yaw\_total}$) in Bezug steht, das das Lenksystem (14) sicherstellen kann, und in Abhängigkeit von einer maximalen Gierwinkelgeschwindigkeit, die das Kraftfahrzeug (10) überstehen kann, bestimmt wird.

6. Verfahren nach den vier vorhergehenden Ansprüchen, wobei die Schwelle ($\alpha_{max}$) mittels einer ersten Gleichung berechnet wird:

$$\alpha_{max} = min\left(\frac{l_f(C_f + C_r)}{C_r\left[(l_f + l_r)^2 + \kappa V^2\right]}\frac{\delta_{safety}}{\rho_{max}}, \frac{l_f(C_f + C_r)}{C_r\left[(l_f + l_r)^2 + \kappa V^2\right]}\frac{\dot{\delta}_{safety}}{\dot{\rho}_{max}}, 1\right)$$

wobei:

$$\kappa = m\left(\frac{l_r}{C_f} - \frac{l_f}{C_r}\right)$$

und wobei:

V die Geschwindigkeit des Kraftfahrzeugs (10) ist,
$l_f$ der Abstand zwischen dem Schwerpunkt und der Vorderachse des Kraftfahrzeugs (10) ist,
$l_r$ der Abstand zwischen dem Schwerpunkt und der Hinterachse des Kraftfahrzeugs (10) ist,
$C_f$ der Schräglaufsteifigkeits-Koeffizient der Vorderräder des Kraftfahrzeugs (10) ist,
$C_r$ der Schräglaufsteifigkeits-Koeffizient der Hinterräder des Kraftfahrzeugs (10) ist,
m die Masse des Kraftfahrzeugs (10) ist,
$\delta_{safety}$ die maximale Lenkwinkelgrenze der Räder (11, 12) des Kraftfahrzeugs (10) ist,
$\rho_{max}$ die maximale Bahnkrümmung ist, der das Kraftfahrzeug (10) folgen kann,
$\dot{\delta}_{safety}$ die maximale Lenkgeschwindigkeitsgrenze der Räder (11, 12) des Kraftfahrzeugs (10) ist,
$\dot{\rho}_{max}$ die maximale Gierwinkelgeschwindigkeit ist, die das Kraftfahrzeug (10) überstehen kann.

7. Verfahren nach einem der vorhergehenden Ansprüche, wobei die Schwelle ($\alpha_{max}$) mit dem maximalen Anteil des Gesamtgiermoments ($M_{Yaw\_total}$) in Bezug steht, das das Lenksystem (15) sicherstellen kann, und in Abhängigkeit von einer maximalen Giermomentgrenze bestimmt wird, die vom Differentialbremssystem (15) auferlegt werden kann.

8. Verfahren nach dem vorhergehenden Anspruch, wobei die Schwelle ($\alpha_{min}$) mittels einer zweiten Gleichung berechnet wird:

$$\alpha_{min} = max\left(1 - \frac{(C_f + C_r)}{C_f C_r \left[(l_f + l_r)^2 + \kappa V^2\right]} \frac{M_{DB\_sat\_act}}{\rho_{max}}, 0\right)$$

wobei:

$$\kappa = m\left(\frac{l_r}{C_f} - \frac{l_f}{C_r}\right)$$

und wobei:

V die Geschwindigkeit des Kraftfahrzeugs (10) ist, $l_f$ der Abstand zwischen dem Schwerpunkt und der Vorderachse des Kraftfahrzeugs (10) ist,
$l_r$ der Abstand zwischen dem Schwerpunkt und der Hinterachse des Kraftfahrzeugs (10) ist,
$C_f$ der Schräglaufsteifigkeits-Koeffizient der Vorderräder des Kraftfahrzeugs (10) ist,
$C_r$ der Schräglaufsteifigkeits-Koeffizient der Hinterräder des Kraftfahrzeugs (10) ist,
m die Masse des Kraftfahrzeugs (10) ist,
$M_{DB\_sat\_act}$ die maximale Giermomentgrenze ist, die vom Differentialbremssystem (15) auferlegt werden kann,
$\rho_{max}$ die maximale Bahnkrümmung ist, der das Kraftfahrzeug (10) folgen kann.

9. Verfahren nach den Ansprüchen 6 und 8, wobei vorgesehen ist, eine erste Schwelle ($\alpha_{max}$) mittels der ersten Gleichung und eine zweite Schwelle ($\alpha_{min}$) mittels der zweiten Gleichung zu berechnen, und wobei, wenn die erste Schwelle ($\alpha_{max}$) niedriger als die zweite Schwelle ($\alpha_{min}$) ist:

- der Sollwert zur Regelung des Lenksystems (14) auf Null gewählt wird,
- der Sollwert zur Regelung des Differentialbremssystems (15) auf Null gewählt wird, und
- es vorgesehen ist, einen Sollwert ungleich null zur Regelung eines herkömmlichen Bremssystems (16) des Kraftfahrzeugs (10) zu erzeugen.

10. Verfahren nach einem der vorhergehenden Ansprüche, wobei vor dem Schritt des Erfassens die Bahn (T1) in Abhängigkeit von der Position eines Hindernisses (20) bestimmt wird, das sich auf dem Weg des Kraftfahrzeugs (10) befindet.

**Claims**

1. Method for generating a setpoint for controlling a steering system (14) and a differential braking system (15) of a motor vehicle (10), comprising the steps of:

   - acquiring a value relating to a total yaw moment ($M_{Yaw\_total}$) to be applied to the motor vehicle (10) so that it follows a required path (T1), and the speed (V) of the motor vehicle (10),
   - calculating, as a function of said speed (V), at least one threshold ($\alpha_{min}$, $\alpha_{max}$) relating to the maximum proportion of the total yaw moment ($M_{Yaw\_total}$) that the steering system (14) or that the differential braking system (15) can provide,
   - determining, as a function of said threshold (($\alpha_{max}$), a distribution rate ($\alpha_R$) relating to the proportion of the total yaw moment ($M_{Yaw\_total}$) that the steering system (14) or that the differential braking system (15) must provide, and
   - generating a setpoint for controlling the steering system (14) and the differential braking system (15) as a function of said distribution rate ($\alpha_R$) and of the value relating to the total yaw moment ($M_{Yaw\_total}$).

2. Method according to the preceding claim, in which the threshold ($\alpha_{max}$) relates to the maximum proportion of the total yaw moment ($M_{Yaw\_total}$) that the steering system (14) can provide and is determined as a function of a maximum limit of the steering angle ($\delta$) of wheels (11) of the motor vehicle (10).

3. Method according to either of the preceding claims, in which the threshold ($\alpha_{max}$) relates to the maximum proportion of the total yaw moment ($M_{Yaw\_total}$) that the steering system (14) can provide and is determined as a function of a maximum limit of the steering speed of wheels (11) of the motor vehicle (10).

4. Method according to one of the preceding claims, in which the threshold ($\alpha_{max}$) relates to the maximum proportion of the total yaw moment ($M_{Yaw\_total}$) that the steering system (14) can provide and is determined as a function of a maximum curvature of the path that the motor vehicle (10) can follow.

5. Method according to one of the preceding claims, in which the threshold ($\alpha_{max}$) relates to the maximum proportion of the total yaw moment ($M_{Yaw\_total}$) that the steering system (14) can provide and is determined as a function of a maximum angular yaw rate that the motor vehicle (10) can endure.

6. Method according to the four preceding claims, in which said threshold ($\alpha_{max}$) is calculated by means of a first equation:

$$\alpha_{max} = min\left(\frac{l_f(C_f + C_r)}{C_r[(l_f + l_r)^2 + \kappa V^2]} \frac{\delta_{safety}}{\rho_{max}}, \frac{l_f(C_f + C_r)}{C_r[(l_f + l_r)^2 + \kappa V^2]} \frac{\dot{\delta}_{safety}}{\dot{\rho}_{max}}, 1\right)$$

where:

$$\kappa = m\left(\frac{l_r}{C_f} - \frac{l_f}{C_r}\right)$$

and where:

   V is the speed of the motor vehicle (10),
   $l_f$ is the distance between the center of gravity and the front axle of the motor vehicle (10),
   $l_r$ is the distance between the center of gravity and the rear axle of the motor vehicle (10),
   $C_f$ is the coefficient of cornering stiffness of the front wheels of the motor vehicle (10),
   $C_r$ is the coefficient of cornering stiffness of the rear wheels of the motor vehicle (10),
   m is the mass of the motor vehicle (10),
   $\delta_{safety}$ is the maximum limit of the steering angle of the wheels (11, 12) of the motor vehicle (10),
   $\rho_{max}$ is the maximum curvature of the path that the motor vehicle (10) can follow,
   $\dot{\delta}_{safety}$ is the maximum limit of the steering speed of the wheels (11, 12) of the motor vehicle (10),
   $\dot{\rho}_{max}$ is the maximum angular yaw rate that the motor vehicle (10) can endure.

7. Method according to one of the preceding claims, in which the threshold ($\alpha_{min}$) relates to the maximum proportion of the total yaw moment ($M_{Yaw\_total}$) that the differential braking system (15) can provide and is determined as a function of a maximum yaw moment limit that can be imposed by the differential braking system (15).

8. Method according to the preceding claim, in which the threshold ($\alpha_{min}$) is calculated by means of a second equation:

$$\alpha_{min} = max\left(1 - \frac{(C_f + C_r)}{C_f C_r [(l_f + l_r)^2 + \kappa V^2]} \frac{M_{DB\_sat\_act}}{\rho_{max}}, 0\right)$$

where:

$$\kappa = m\left(\frac{l_r}{C_f} - \frac{l_f}{C_r}\right)$$

and where:

V is the speed of the motor vehicle (10),
$l_f$ is the distance between the center of gravity and the front axle of the motor vehicle (10),
$l_r$ is the distance between the center of gravity and the rear axle of the motor vehicle (10),
$C_f$ is the coefficient of cornering stiffness of the front wheels of the motor vehicle (10),
$C_r$ is the coefficient of cornering stiffness of the rear wheels of the motor vehicle (10),
m is the mass of the motor vehicle (10),
$M_{DB\_sat\_act}$ is the maximum yaw moment limit that can be imposed by the differential braking system (15),
$\rho_{max}$ is the maximum curvature of the path that the motor vehicle (10) can follow.

9. Method according to Claims 6 and 8, in which provision is made to calculate a first threshold ($\alpha_{max}$) by means of the first equation and a second threshold ($\alpha_{min}$) by means of the second equation and in which, if the first threshold ($\alpha_{max}$) is less than the second threshold ($\alpha_{min}$) :

- the setpoint for controlling the steering system (14) is chosen to be zero,
- the setpoint for controlling the differential braking system (15) is chosen to be zero, and
- provision is made to generate a nonzero setpoint for controlling a conventional braking system (16) of the motor vehicle (10).

10. Method according to one of the preceding claims, in which, prior to the acquiring step, the path (T1) is determined as a function of the position of an obstacle (20) situated in the trajectory of the motor vehicle (10) .

**Fig.1**

**Fig.2**

**Fig.3**

**Fig.4**

**Fig.5**

**EP 3 938 260 B1**

## RÉFÉRENCES CITÉES DANS LA DESCRIPTION

### Documents brevets cités dans la description

- US 9925988 B1